# EUROPEAN PATENT SPECIFICATION

(11) **EP 0 951 435 B1**
(45) Date of publication and mention of the grant of the patent: **21.03.2001**
(21) Application number: 97947226.3
(22) Date of filing: 17.12.1997
(51) Int. Cl.: B65G 53/20, B65G 53/52

(54) **A PIPE-TROUGH CONVEYOR FOR PNEUMATIC CONVEYING OF DUSTY MATERIALS**
ROHRTROGARTIGER FÖRDERER FÜR DAS PNEUMATISCHE FÖRDERN VON STAUBFÖRMIGEM MATERIAL
TRANSPORTEUR A AUGE-TUBE POUR TRANSPORT PNEUMATIQUE DES MATERIAUX PULVERANTS

(30) Priority: 23.12.1996 PL 31773196
(43) Date of publication of application: 27.10.1999
(73) Proprietor: Instytut Mineralnych Materialow Budowlanych W Opolu Oddzial W Krakowie, 30-969 Krakow (PL); Biuro Projektow Proacem-Adam Czopek, 30-403 Krakow (PL); Nowak, Edmund, 31-618 Krakow (PL); Czopek, Adam, 30-611 Krakow (PL)
(72) Inventor: NOWAK, Edmund, PL-31-618 Kraków (PL); CZOPEK, Adam, PL-30-611 Kraków (PL)
(74) Representative: Patentanwälte Zellentin & Partner
(86) International application number: PL9700032
(87) International publication number: WO9828210

(56) References cited:
- DE-A- 1 750 541
- DE-A- 3 535 093

## Description

An invention subject-matter is a pipe-trough conveyor for pneumatic conveying of dusty materials preliminary pulverized.

The up-to-date development of industrial application of methods for pneumatic conveying of dusty materials has brought the utilization of worm - pumps or so called pneumatic lifts and aerated trough conveyors. Pumps and lifts make transportation of a dusty material in the compressed, even to 1.0 MPa gas stream, usually air, horizontally as well as at an angle and vertically possible. A typical dusty material concentration in the transportation gas is from 8 to 20 kg per 1 kg of gas, although in recent worm pump constructions concentrations of 40 kg/kg of gas have been reached. A dusty material transportation by means of pumps and lifts is performed in the hermetic pipelines. All the amount of a compressed transportation air is introduced into the pipeline via worm pump and in the case of pneumatic lifts via a special chamber in the way similar to the one applied for example in the feeding device according to the polish patent No. 127987. In the case of a very long pneumatic conveying routes with the use of worm pumps, a flow-assist is applied by the punctual, every 100-300 m, introducing into the pipeline of the clean, compressed air.

The process and system of pneumatic conveying of fluidized dusty materials, forced by means of a positive-displacement pump is known from DE A1 35 35 093, in which a fluidized bed is created in the pressure conduit. This fluidized bed is maintained in appropriate condition by means of upward jets of compressed air, acting when the conveyed material flows along the system. Compressed air is introduced into the system of pneumatic conveying of dusty materials through a tight by-pass conduit situated under the pneumatic conveying pipe-line; compressed air enters this pipe-line through regularly distributed holes in this system. Disadvantages of this process and this installation are: indispensable gradual dilution of the fluidal layer of conveyed dusty material by the air entering from the by-pass conduit; lack of the possibility of multi-point feeding the dusty material into the conveying pipe-line, as well as the need to introduce additional amount of compressed air into the pipe-line at the feeding station from the side of the material feeding.

For a dusty material translocation within 100 m, where the level of material receiving is placed below a supply level, so called aerated trough conveyors are used. The bottom of the areated trough conveyor with hermetic housing is made of gas permeable fabrics or ceramic plates. Under the bottom, all along the trough an appropriate chambers are arranged into which a compressed up to 0.02 MPa air is supplied. That air penetrating the bottom microchannels pulverizes delivered to the bottom dusty material to the fully pulverized state, then the pulverized material begins to flow in the trough inclination direction. An aerated trough conveyor efficiency referred to the amount of consumed air in the dusty materials transportation is up to 20 kg/kg of supplied air. A necessary condition for the removal of dusty material from the silo either to the pump or to the lift is its preliminary pulverization in this silo. The amount of the compressed air consumed here neither decreases nor increases consumption of the air required by the known and actually applied devices for the pneumatic conveying of dusty materials.

The essence of the pipe-trough conveyor for a pneumatic conveying of dusty materials preliminary pulverized according to the invention is that a pipe-trough conveyor consists of a steel or made of plastics or ceramic plastics pipeline manufactured as a whole or built from a separate elements dependent in the matter of amount on the transportation route lenght. A pipeline, during material transportation consumes air which had been introduced into it during its pulverization in the silo and for transportation realization takes compressed air from outside in the amount giving a transportation concentration up to 460 kg of a dusty material per 1 kg of taken air in the case of a horizontal transportation and up to 600 kg of dusty material per1 kg of taken air in the case of transportation at an angle up to 5°. An inner diameter Dₙ of the pipe-trough conveyor, according to the invention is between 20-350 mm and its lenght is up to 120 m. It is recommended that the individual, shorter elements facilitating the pipe-trough conveyor assembly were 2-6 m long. Then, those elements are connected to each other by the known way of joints, for example flanged pipe joints with the known seal of the joint. In the bottom, subaxial part of that pipeline right and left from its long axis in the zone limited by the size of a central angle 16-46°, in the appropriate way a single, longitudinal slots are made. In the section of the pipeline under the filling throat always a two longitudinal slots are made which are placed symmetrically on the subaxial part of the wall in the zone limited by the size of a 24-42° central angle. The lenght of each slot depending on the diameter, pipeline lenght and transported material properties is from 2 Dₙ to 4 Dₙ of the pipeline while its width is from 0.02 Dₙ to 0.06 Dₙ of the pipeline. In the pipelines with the diameters Dₙ larger than 200 mm having high transportation efficiences, the lenght and the width of the slots are not enlarged but their number is increased by adding identical one placed symmetrically to the vertical axis of the pipeline in order to get alternately, in the ratio 1:1 their arrangement the same as it is in the pipeline segment under the charging nozzle. To the pipeline or to the each of its segments from below and all along the pipeline a chamber, sealed against the pipeline and an environment by the known way, is attached with an inner width, in principle, not larger than an external pipeline diameter and a side height, advantageously, not larger than 0.75 of the external pipeline diameter. This chamber comprises a total slots surface on the pipeline wall. In the case of a multisegment pipe-trough conveyor construction, their chambers are in series and flowingly connected to each other and as it was in the case of single segment construction, have one connection to the compressed air source only.

According to the invention, a process property of the pipe-trough conveyor is an effective utilization for pneumatic conveying of that amount of air which had been introduced into the dusty material during its pulverization in the silo. The amount of transportation air appropriately supplied to the pipe-trough conveyor is limited to the amount necessary for maintaining of the same degree of dusty material pseudofluidization as had been reached in the silo during pulverization.

The utilization of the process property of the pipe-trough conveyor according to the invention enables to a pneumatic conveying of dusty material realization horizontally at a concentration up to 460 kg/kg and with a pipe-trough conveyor inclined at an angle up to 2° at a concentration up to 600 kg/kg of transportation air.

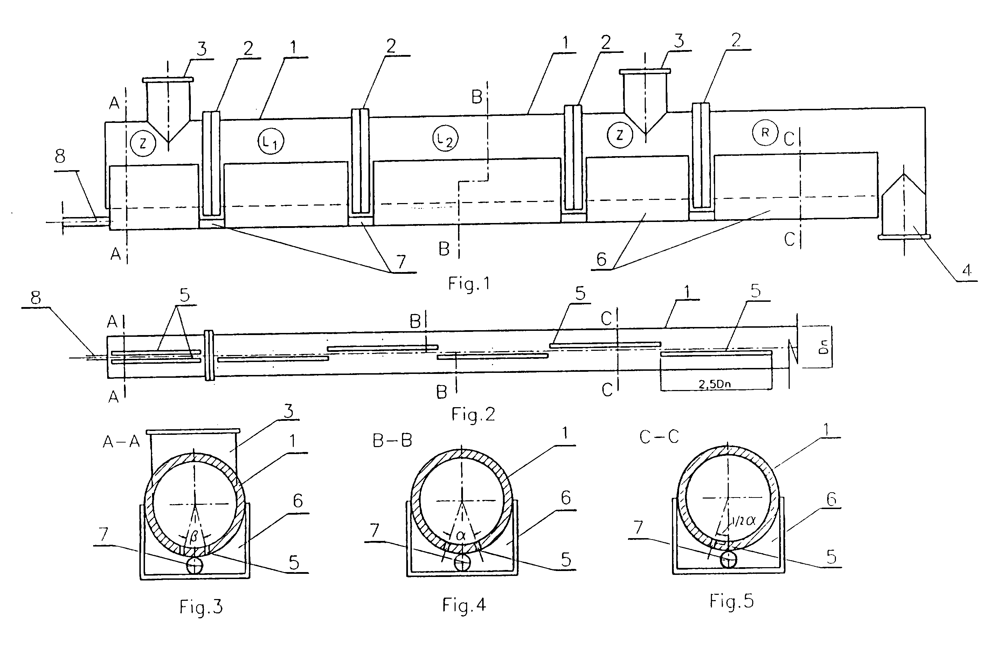

An invention subject-matter, a pipe-trough conveyor for pneumatic conveying of dusty materials in the exemplary construction is shown on the drawing where Fig.1 presents a general view of the multisegment pipe-trough conveyor with two charging nozzles and a discharging nozzle, Fig. 2 shows a view from below of a transportation pipeline with a segment under the charging nozzle which explains the way of slots arrangement where compressed transportation air penetrates into the pipeline, Fig. 3 shows A-A section of the transportation pipeline in the segment under the charging nozzle in the place marked on the Fig. 1 and Fig. 2. Fig. 4 and Fig. 5 present sections B-B and C-C marked on the Figs. 1 and 2, respectively, occuring repeatedly all along the pipeline and its any mounting segment. According to the principle and an exemplary construction presented on the drawing, the pipe-trough conveyor for a pneumatic conveying of dusty materials preliminary pulverized is built from a steel, plastics or ceramic plastics pipeline (1) constructed as a whole or mounted from a separate segments L₁,L₂...Lₙ dependent in the matter of amount on the transportation route lenght connected in this case by means of the flanged pipe joints (2). Into the lenght of the pipeline according to the needs, an appropriate number of segments "Z" is incorporated with nozzles (3) for a pipe-trough conveyor material delivery which is to be transported and at least one at an outlet segment "R" with a discharging nozzle (4). A pipe-trough conveyor cut-off from a charging tanks above the nozzles (3) and a receiving tanks under the nozzles (4) is executed by means of bolts for example baffle-bolts not shown on the drawing. On the bottom, subaxial part of the side wall of the pipeline (1) alternately a longitudinal slots (5) are made 2.5 of the pipeline diameter in lenght and those slots (0.03 Dₙ in width) arrangement is alternating in the following way: one slot to the left and the second following slot to the right from its longitudinal axis symmetrically, so that in the view on the cross-section they form a central angle α = 40° in the pipeline transportation segment (L₁,L₂...Lₙ) and an angle β = 30° in the segment "Z" with a charging nozzles (3). It is advisable to place the slots in the segments "Z" parallely to the vertical axis of the pipeline (Fig. 3) and radially in the segments (L₁,L₂...Lₙ), (Fig. 4 and Fig. 5). To the pipeline (1) on its whole lenght or to the each of its segments (L₁,L₂...Lₙ), "Z" and "R" also on their whole lenght a chamber (or chambers) is/are tightly attached by the known way and made, advantageously, in the metal housing connected to each other flowingly by means of rigid or flexible joints (7) and having one common nozzle (8) for connection to the compressed air tank.

### An example

In the cement plant for a cement transportation from the silos to the bagging machine (its efficiency is 30 Mg/h) an aerated trough conveyor 50 m long and inclined at an angle 5° had been used. Consumption of a transportation air under pressure 0.018 MPa was 1800 kg/h. Transportation concentration was 16.7 kg of cement/kg of the air. A new bagging machine has been installed and a transportation efficiency for that machine had to be increased twofold, so that the offers for a new aerated trough conveyor had been collected. A necessary condition for the trough operating with an efficiency 60 Mg/h with compressed air (0.02 MPa) utilization in the amount of 3200 kg/h (transportation concentration was 18.75 kg of cement/kg of the air) was its inclination at an angle 7° what excluded its assembly in the existing structure of silos and packing shops. A pipe-trough conveyor according to the described invention with a pipeline diameter Dₙ = 150 mm in the multisegment construction and horizontal arrangement has been applied. An expected capacity of 60 Mg/h was obtained with a transportation air consumption (pressure 0.3 MPa at the pipe-trough conveyor inlet) in the amount 146.7 kg/h. Transportation concentration, in relation to that air was 409 kg of cement per 1 kg of the air.

## Claims

1. A pipe-trough conveyor for pneumatic conveying of preliminary pulverized dusty materials horizontally and/or when inclined downwards at an angle up to 5° with consumption of the compressed air from outside, the pipe-trough conveyor consists of a pipeline (1) having at the bottom a chamber (6) which is tightly connected by means of a nozzle (8) with a compressed air tank characterized by the fact that the pipeline (1) is made of steel, plastics or ceramic plastics, said pipeline (1) having on the bottom part of its side wall longitudinally and alternately on the right and left side of the longitudinal axis for that part of the wall longitudinal slots (5) and said pipeline (1) having on its whole length at least one initial segment (Z) with a nozzle (3) for a dusty material delivery; said initial segment (Z) on the bottom part of the side wall, symmetrically to its axis having two longitudinal slots (5) and a final segment (R) with at least one discharging nozzle (4); said pipeline (1) during material transportation consumes air which has been introduced into it during its pulverization in the silo and for transportation realization takes compressed air from outside in minimum amount, which can be further reduced in the case of downward inclination of the conveying pipe-line.

2. A pipe-trough conveyor according to the Claim 1 wherein: longitudinal slots in the pipeline (1) are from 2 to 4 of the nominal diameter of the pipeline Dₙ long, the width is from 0.02 to 0.06 Dₙ and are arranged on the side wall of the pipeline, so that they form a central angle α = (16-46)°, and in the pipeline under the charging nozzle an angle β = (24-42)°.

3. A pipe-trough conveyor according to the Claim 1 wherein: its total lenght may be divided into segments facilitating its production assembly in the amount (L₁,L₂...Lₙ) which are to be tightly connected to each other by the known way.

4. A pipe-trough conveyor according to the Claim 2, wherein: a chamber (6) has, advantageously, a lateral, inner width equal to the external diameter of the pipeline and a side height up to 0.75 of the external diameter of the pipeline (1) and its length is equal to the length of the pipeline (1) or to the length of separate segments taken together (L₁,L₂...Lₙ) and has one connection to the compressed air source and in the case of a multisegment construction their chambers are flowingly and in series connected to each other by means of the joints (7) and have one common connection to the compressed air source via a nozzle (8).

## Patentansprüche

1. Rohrtrogartiger Förderer für das pneumatische Fördern von vorausgehend pulverisiertem staubförmigem Material in horizontaler Richtung und/oder in einer Abwärtsneigung in einem Winkel von bis zu 5° unter Verbrauch von von außen zugeführter Druckluft, wobei der rohrtrogartige Förderer aus einer Rohrleitung (1) besteht, die an ihrem Boden eine Kammer (6) aufweist, die mittels einer Düse (8) mit einem Drucklufttank dicht verbunden ist,
dadurch gekennzeichnet,
daß die Rohrleitung (1) aus Stahl, Kunststoff oder Keramik-Kunststoff hergestellt ist, wobei die Rohrleitung (1) an dem Bodenteil ihrer Seitenwand Längsschlitze (5) aufweist, die in Längsrichtung und abwechselnd an der rechten und der linken Seite der Längsachse für jenen Teil der Wand angeordnet sind,
wobei die Rohrleitung (1) über ihre gesamte Länge zumindest ein Anfangssegment (Z) mit einer Düse (3) für eine Zuführung von staubförmigem Material aufweist, wobei das Anfangssegment (Z) an dem Bodenteil der Seitenwand symmetrisch zu seiner Achse zwei Längsschlitze (5) enthält, und ein Endsegment (R) mit zumindest einer Auslaßdüse (4) aufweist; und
wobei die Rohrleitung (1) während dem Transport des Materials Luft verbraucht, die ihm während seiner Pulverisierung in dem Silo zugeführt worden ist, und für die Durchführung des Transportes Druckluft von außen in einer geringen Menge aufnimmt, die im Falle einer Abwärtsneigung der Förderrohrleitung weiter reduziert werden kann.

2. Rohrtrogartiger Förderer nach Anspruch 1, dadurch gekennzeichnet, daß die Längsschlitze in der Rohrleitung (1) eine zwei- bis vierfache Länge des nominalen Durchmessers Dₙ der Rohrleitung aufweisen, daß ihre Breite von 0,02 bis 0, 06 des Durchmessers Dₙ beträgt und daß sie an der Seitenwand der Rohrleitung angeordnet sind, so daß sie einen zentralen Winkel α = (16-46)° bilden und in der Rohrleitung unter der Befülldüse einen Winkel β = (24-42)° bilden.

3. Rohrtrogartiger Förderer nach Anspruch 1, dadurch gekennzeichnet, daß seine Gesamtlänge in Segmente unterteilt sein kann, wobei der Zusammenbau erleichtert wird entsprechend der Anzahl (L1,L₂, ... Lₙ) der Segmente, die in bekannter Weise miteinander dicht verbunden werden.

4. Rohrtrogartiger Förderer nach Anspruch 2, dadurch gekennzeichnet, daß eine Kammer (6) vorzugsweise eine seitliche innere Breite aufweist, die gleich dem Außendurchmesser der Rohrleitung ist, und eine Seitenhöhe bis zu 0,75 des Außendurchmessers der Rohrleitung (1) aufweist und ihre Länge gleich der Länge der Rohrleitung (1) oder der Länge von separaten zusammengestellten Segmenten (L₁,L₂ ... Lₙ) ist und eine Verbindung zu der Druckluftquelle aufweist und daß im Falle einer Vielsegmentkonstruktion ihre Kammern mittels der Verbindungen (7) in Strömungsverbindung in Reihe miteinander verbunden sind und sie über die Düse (8) eine gemeinsame Verbindung mit der Druckluftquelle aufweisen.

## Revendications

1. Transporteur à auge-tube pour le transport pneumatique de matériaux pulvérulents préalablement pulvérisés dans un plan horizontal et/ou incliné vers le bas suivant un angle maximum de 5° avec apport d'air comprimé provenant de l'extérieur, le transporteur à auge-tube comprenant une conduite (1) ayant dans sa partie inférieure une chambre (6) qui est étroitement connectée au moyen d'une tubulure (8) à un réservoir d'air comprimé, caractérisé en ce que la conduite (1) est fabriquée en acier, en plastique ou en céramique-plastique, ladite conduite (1) ayant sur la partie inférieure de sa paroi latérale, longitudinalement et alternativement sur le côté droit et le côté gauche de l'axe longitudinal pour cette partie de la paroi, des fentes longitudinales (5), et ladite conduite (1) ayant sur sa longueur totale au moins un segment initial (Z) avec une tubulure (3) pour la fourniture d'un matériau pulvérulent; ledit segment initial (Z), sur la partie inférieure de la paroi latérale ayant, symétriquement à son axe, deux fentes longitudinales (5), et un segment final (R) avec au moins une tubulure de décharge (4); ladite conduite (1) consommant, pendant le transport du matériau, de l'air introduit dans celle-ci pendant la pulvérisation dans le silo et recevant, pour réaliser le transport, de l'air comprimé de l'extérieur en faible quantité, celle-ci pouvant être en outre réduite dans le cas d'une inclinaison vers le bas de la conduite de transport.

2. Transporteur à auge-tube selon la revendication 1, dans lequel les fentes longitudinales dans la conduite (1) ont une longueur de 2 à 4 fois le diamètre nominal Dₙ de la conduite et une largeur de 0,02 à 0,06 fois Dₙ, et sont disposées sur la paroi latérale de la conduite, de telle sorte qu'elles forment un angle au centre α= (16 - 46)°, et dans la conduite sous la tubulure de chargement un angle β = (24 - 42)°.

3. Transporteur à auge-tube selon la revendication 1, dans lequel sa longueur totale peut être divisée en segments facilitant son assemblage en production dans la quantité (L₁, L₂, ..., Lₙ) qui sont à connecter étroitement entre eux par la méthode connue.

4. Transporteur à auge-tube selon la revendication 2, dans lequel une chambre (6) a avantageusement une largeur intérieure latérale égale au diamètre extérieur de la conduite et une hauteur latérale pouvant atteindre 0,75 fois le diamètre extérieur de la conduite (1) et sa longueur est égale à la longueur de la conduite (1) ou à la longueur de segments séparés pris ensemble (L₁, L₂, ..., Lₙ) et a une connexion à la source d'air comprimé et, dans le cas d'une construction à segments multiples, leurs chambres sont connectées entre elles de manière fluide et en série au moyen des joints (7) et ont une connexion commune à la source d'air comprimé par l'intermédiaire d'une tubulure (8).
